Europäisches Patentamt

European Patent Office

Office européen des brevets

(11) Numéro de publication : **0 483 012 A1**

# (12) DEMANDE DE BREVET EUROPEEN

(21) Numéro de dépôt : **91402852.7**

(22) Date de dépôt : **25.10.91**

(51) Int. Cl.⁵ : **A23G 3/00,** A23B 7/08, A23L 1/325, A23L 1/20

(30) Priorité : **25.10.90 FR 9013499**

(43) Date de publication de la demande :
**29.04.92 Bulletin 92/18**

(84) Etats contractants désignés :
**AT BE CH DE DK ES FR GB GR IT LI LU NL SE**

(71) Demandeur : **Ballerini-Goffe, Monique**
**57, avenue de Cyrnos**
**F-06000 Nice (FR)**

(72) Inventeur : **Ballerini-Goffe, Monique**
**57, avenue de Cyrnos**
**F-06000 Nice (FR)**

(74) Mandataire : **Hammond, William et al**
**Cabinet Hammond et Autres 17, rue Pasteur**
**F-92300 Levallois-Perret (FR)**

(54) **Procédé pour l'obtention de nouveaux produits agro-alimentaires confits.**

(57)     Procédé pour l'obtention de nouveaux produits agro-alimentaires par le processus usuel de confisage consistant à traiter un support tel qu'un fruit ou légume par des sirops de sucre à concentrations croissantes de manière à déterminer l'échange de l'eau contenue dans ledit support par le sucre contenu dans le sirop, caractérisé en ce que ledit support étant dépourvu de goût ou n'ayant qu'un goût peu prononcé ou peu agréable, ou encore perdant son goût par le confisage, on additionne auxdits sirops un extrait ou arôme d'un fruit, légume ou analogue, de manière telle que cet extrait ou arôme soit transféré en même temps que le sucre audit support confisable, auquel est ainsi conféré le goût correspondant.

EP 0 483 012 A1

Jouve, 18, rue Saint-Denis, 75001 PARIS

La présente invention concerne un procédé pour l'obtention d'une nouvelle catégorie de produits agro-alimentaires, ainsi que les produits obtenus par ce procédé.

Ces nouveaux produits peuvent être définis comme étant des produits "confits" constitués par un support comestible, confisable, mais dépourvu de goût ou n'ayant qu'un goût peu marqué et dans lequel, la mise en oeuvre dudit procédé a provoqué le transfert du goût d'au moins un produit non confisable en soi, mais de goût agréable ou que l'on souhaite transférer audit support pour une raison quelconque.

Le principe de base sur lequel repose le procédé selon l'invention découle du fait que, dans le processus de confisage d'un produit confisable, par exemple un fruit ou un légume, par remplacement de l'eau contenue dans ce produit par du sucre provenant d'un sirop dans lequel est maintenu ledit produit confisable durant les différentes étapes du processus classique de confisage, si ledit sirop contient au surplus un extrait ou arôme d'un autre fruit ou légume ou autre produit dont on souhaite obtenir le goût, ledit arôme vient se fixer avec le sucre dans le produit à confire, le sucre véhiculant en quelque sorte ledit arôme.

Le procédé selon l'invention consiste donc à mettre à profit ce phénomène de transfert pour créer des produits nouveaux, constitués par un support de nature quelconque, mais bien entendu comestible et confisable, ne possédant en lui même pas de goût propre, ou seulement un goût peu marqué ou sans agrément, ou encore perdant de son goût par le confisage dans lequel a été transféré le goût et/ou l'arôme d'un produit dont le goût et/ou l'arôme sont plaisants et recherchés, mais, qui n'étant en principe pas confisable ne peut être présenté ni conservé en tant que tel.

Il convient de noter que le principe de base de ce procédé avait déjà été entrevu. Ainsi, dans le brevet français N° 823 182 remontant à 1937, il a été proposé de compenser la perte de saveur et d'arôme subie par les fruits au cours de la préparation de fruits dits "candis" ou "glacés" par traitement dans des solutions aqueuses de sucre en remplaçant ces solutions par le jus de fruit correspondant dans chaque cas au fruit à traiter.

Toutefois, ce procédé ancien comportait deux limitations :
- il était limité à la simple compensation de la perte de saveur et d'arôme d'un fruit, et
- il était limité aux fruits.

La présente invention vise donc une double extension de ce procédé ancien :
- d'une part, il vise le renforcement de la saveur et du goût d'un fruit,
- d'autre part, il vise le traitement, non seulement des fruits connus pour être "confisables", mais encore, plus généralement de tout support comestible notamment mais non nécessairement fibreux, dépourvu de goût ou ayant un goût désagréable.

Ainsi, l'application la plus immédiate du procédé selon l'invention est la création de fruits confits ayant le goût de fruits non confisables, ou difficilement confisables par exemple des poires ayant le goût de de groseille ou de fraise. Selon une variante, il est également possible de créer des légumes ayant le goût d'autres légumes ou fruits par exemple des courges ayant le goût de melon, de noix de coco ou de banane.

Selon une extension particulièrement intéressante de l'invention, il est possible, dans le cadre de ladite invention, de créer des produits encore plus originaux et complètement nouveaux, en utilisant comme supports non plus des fruits ou légumes déjà existants mais des produits comestibles, éventuellement amenés à des formes originales telles que bâtonnets, plaquettes, tétraèdres, formes de personnages ou d'animaux, etc..., de matière pectinique, de fibres de soja comprimées, de poisson dénaturé tel que le "tsurimi" dans lesquels sont fixés par un processus identique, à savoir une série de séjours dans des sirops de sucre à concentrations croissantes en sucre, ces sirops étant additionnés d'extraits ou d'arômes de fruits de légumes ou autres aromates tels que plantes, herbes aromatique, épices un ou plusieurs constituants conférant à ces produits un goût et/ou arôme différent, agréable et attractif.

Comme source de goût ou d'arôme à additionner au sirop de sucre utilisé dans ce procédé de transfert, on peut choisir aussi bien des extraits naturels, artificiels ou semi-artificiels ou des jus des fruits envisagés ou leurs mélanges ou cocktails, que des arômes artificiels, dont la qualité ne risque pas d'être affectée par la mise en oeuvre du procédé, en vue de modifier ou renforcer la saveur du support confisable.

A titre d'exemples de processus rentrant dans le cadre de l'invention, on va expliquer ci-après en détail la fabrication d'un certain nombre de produits à goût transféré, modifié ou renforcé.

Exemple 1: Poires ayant le goût et la couleur de la groseille.

Dans cet exemple, on utilise, pour 1 Kg de poires, 250 g de groseilles et du sirop de sucre inverti.

Ayant préparé un jus de groseilles par broyage, on y ajoute du sirop de sucre inverti et de l'eau jusqu'à une densité de 1,1159, et on y place les poires. Le lendemain, on porte la densité du sirop à 1,1609, le quatrième jour, on la porte à 1,2095 ; on attend alors trois jours, et on la porte à 1,2624 au moyen d'un mélange à 50/50 de glucose et de sirop de sucre inverti ; enfin, trois jours après, on porte la densité à 1,3319 avec du glucose. On obtient ainsi, en dix jours au total :
- des poires colorées en rouge groseille,
- des poires dont le goût est relevé par l'acidité de la groseille, le goût de laquelle venant s'ajouter à leur goût naturel.

On notera que le sirop obtenu peut être réutilisé pour préparer des confitures, marmelades etc...

Exemple 2: Courges ayant le goût de la banane.

Dans cet exemple, on utilise, pour 1 Kg de courge, du sirop de sucre inverti et 55 ml d'arôme naturel de banane.

On prépare un sirop à 1,1425 avec 35 ml de l'arôme de banane et on y place les courges découpées en cubes. Le lendemain on porte la densité à 1,1609, le surlendemain à 1,2095 et après trois jours, on ajoute les 20 ml restants d'arôme et on porte la densité à 1,2624 ; deux jours après on la porte à 1,2964 et le surlendemain à 1,3199 avec du glucose.

On obtient ainsi, en 7 jours, des cubes de courge ayant le goût de la banane.

Exemple 3: Pêches confites à goût renforcé.

Dans cet exemple, on utilise, pour 1 Kg de pêches, 25 ml d'arôme de pêche et du sirop de sucre inverti.

On prépare un sirop à la densité de 1,1159 avec les 25 ml d'arôme de pêche et on y place les pêches. Le lendemain, on porte la densité à 1,11247, le jour suivant on la porte à 1,1799, puis au bout de deux jours, on la porte à 1,2301, puis au bout de deux jours, on la porte à 1,2850 avec du glucose et trois jours après, on la porte enfin à 1,3199 avec du glucose.

On obtient ainsi en dix jours des pêches confites ayant réellement le goût de la pêche, alors que par le processus usuel de confisage, le goût normal est fortement diminué, ou même inexistant.

Exemple 4: Abricots confits à goût renforcé.

Dans cet exemple, on utilise, pour 1 Kg d'abricots, 30 ml d'arôme naturel d'abricot et du sucre non inverti.

On prépare un sirop à 18° Baumé avec 20 ml de l'arôme d'abricot et on y place les abricots. Le processus de confisage est alors le suivant :
– après 3 jours, porter la densité à 1,1609
– après 3 jours, porter la densité à 1,2095
– après 3 jours, porter la densité à 1,2407 et rajouter 10 ml d'arôme
– après 3 jours, porter la densité à 1,2624 avec du glucose
– après 3 jours, porter la densité à 1,2964 avec du glucose
– après 3 jours, porter la densité à 1,3199 avec du glucose.

On obtient ainsi en 18 jours, des abricots confits ayant vraiment leur goût d'abricots.

Exemple 5: Poires au punch de noix de coco au rhum blanc.

Dans cet exemple, on utilise, pour 1 Kg de poires 35 cl de punch de noix de coco au rhum blanc à 16° et du sirop de sucre inverti.

On ajoute au punch du sirop de sucre inverti pour obtenir un mélange à une densité de 1,1425 et on y place les poires. Le lendemain, on porte cette densité à 1,1609, puis le jour suivant à 1,2095, puis après deux jours, on la porte à 1,1264 avec un mélange à 50/50 de glucose et de sirop de sucre inverti. Deux jours après, on porte encore cette densité à 1,2964 avec du glucose. Deux jours après, on porte cette densité à 1,3319.

On obtient ainsi, en neuf jours des poires confites ayant le goût du punch de rhum à la noix de coco.

Exemple 6: Blocs de soja confit au goût d'ananas.

Dans cet exemple, on utilise quatre blocs de 250 g de soja, 45 ml d'arôme naturel d'ananas et du sirop de sucre inverti.

On prépare un sirop avec l'arôme à 18° Baumé. Le processus est ensuite le suivant :
– après 1 jour, porter la densité à 1,1609
– après 1 jour, porter la densité à 1,2095
– après 3 jours, porter la densité à 1,2624
– après 1 jour, porter la densité à 1,2964
– après 1 jour, porter la densité à 1,3319
On observe que le soja se confit et présente le goût d'ananas.

Exemple 7: Pyramides de tsurimi au chocolat et à la menthe.

Dans cet exemple on utilise, pour 1 Kg de tsurimi (pâte de poisson dénaturé), 80 g de chocolat en tablette, 10 g de cacao, 20 ml de menthe et du sirop de sucre inverti.

On prépare, avec le chocolat, le cacao, la menthe et le sirop de sucre inverti un sirop que l'on ajuste à 1,1159 ; on y place de petits tétraèdres de tsurimi d'environ 15 mm de côté.

Le lendemain, on porte ce sirop à 1,1609.

Le surlendemain, on le porte à 1,2095, puis on attend 2-3 jours, et on le porte à 1,2407, et trois jours après on le porte à 1,2964, avec le même sirop de sucre inverti ou avec du glucose, et enfin, deux jours après on le porte à 1,3319.

On obtient ainsi des bonbons en forme de pyramides, ayant la couleur du chocolat et un excellent goût de chocolat à la menthe.

Exemple 8: Pavé de tsurimi au saumon fumé, à l'estragon et au citron

Dans cet exemple, on utilise, pour 1 Kg de tsurimi, 50 ml d'arôme de saumon fumé tel que commercialisé sous la marque "SOLUBAROME" par la firme "Château des Arômes" à Vence (France), 20 ml d'extrait de citron, 10 ml de concentré d'estragon et du sirop de sucre inverti.

On prépare, avec les parfums, les arômes et le sirop de sucre, un sirop à densité de 1,1425, dans lequel on place des cubes de tsurimi d'environ 5 cm de côté.

Les deux jours suivants on porte le sirop successivement à 1,1609 ; on attend trois jours, puis on porte le sirop à 1,2407, et les deux jours suivants, à 1,2850 et 1,3199, au moyen de glucose.

On obtient ainsi des cubes ayant le goût et le parfum de saumon fumé aromatisé au citron et à l'estragon.

Exemple 9: Bâtonnets de tsurimi ayant la saveur du lièvre au gingembre et à la groseille.

Dans cet exemple, on utilise, pour 1 Kg de bâtonnets de tsurimi, d'environ 10 X 1 X 1 cm, 50 ml de saveur de lièvre, tel que commercialisée sous la marque "SOLUBAROME" par la firme "Château des Arômes", 40 ml d'arôme de groseille, 10 ml d'arôme de gingembre et du sirop de sucre inverti.

On prépare, avec tous les arômes et le sirop de sucre inverti, un sirop à une densité de 1,1425 et on y place les bâtonnets ; les deux jours suivants, on porte le sirop successivement à 1,1609 puis 1,2095, on laisse reposer trois jours, puis on porte le sirop à 1,2407, puis trois jours après à 1,3319 avec du glucose.

On obtient ainsi des bâtonnets qui, à la consommation, donnent l'impression d'un morceau de lièvre cuisiné au gingembre et accompagné de groseilles.

On notera que le confisage, opération faisant intervenir essentiellement du sucre, n'est nullement incompatible avec des produits alimentaires ou des plats normalement salés, tels que les volailles, le gibier, l'agneau, le poisson ou analogues, dans la mesure où de tels plats sont couramment cuisinés avec des accompagnements sucrés, comme par exemple le canard à l'orange ou aux pêches, l'agneau à la gelée de menthe, le chevreuil à la confiture d'airelles ou le jambon à l'ananas.

Comme autres supports confisables que l'on peut utiliser dans le cadre de l'invention on peut citer également les céréales, les feuilles, les fleurs, les rhizomes, les algues, les viandes etc... On notera en particulier que certains de ces supports qui en eux mêmes seraient des denrées comestibles particulièrement intéressantes en raison de leur pouvoir nutritif, énergétique, calorique ou autres, mais n'ont pas de goût ou n'ont qu'un goût peu agréable ou peu prononcé, peuvent ainsi être offerts au consommateur, sous forme d'aliments savoureux grâce à l'apport, selon l'invention, d'autres goûts, tandis que le sucre, et le cas échéant, le miel utilisé pour le confisage leur apportera à la fois leur pouvoir nutritif et leurs propriétés de conservation. On pourra d'ailleurs, selon le cas, marier les denrées sucrées et salées comme en matière culinaire, et apporter des arômes dont on se sert tant pour la cuisine salée que pour la pâtisserie.

Comme autres produits dont on peut transférer le goût au produit confisable, on peut citer les parfums, arômes, extraits, concentrés, poudres et analogues, à l'état frais, séché, en jus, nectar, conserve et analogues, de tous les fruits classiques : pêche, poire, pomme, abricot, ananas, cerise, cassis, fraise, framboise, myrtille, groseille, mûre, banane, orange, pamplemousse, clémentine, mandarine, citron, abricot, melon, kiwi, noix de coco, amande, noix, noisette, châtaigne, cédrat, coing, figue, prune, pastèque, brugnon, physalis, sorbier, nèfle, raisin, pignon, datte, kaki, rhubarbe, nectarine, mangue, mangoustan, gingembre, fruit de la passion, litchi, papaye, goyave et autres fruits exotiques, y compris leurs rhizomes et leurs racines, bulbes etc...

Sont également utilisables les épices tels que menthe, anis, aneth, café, cannelle, cardamome, chocolat, cumin, érable, girofle, muscade, pistache, rose, violette, vanille, praliné, caramel, fleur d'oranger, réglisse, bergamote, orgeat, avocat, cacao, marasque, fenouil, "cinq épices", thym, laurier, romarin, carvi, coriandre, paprika, piment etc...

On peut même concevoir l'application du présent procédé à l'obtention de viandes ayant des goûts plus recherchés, par utilisation par exemple de saveurs de lièvre, de saumon, de truffe, de morille, de cèpe, de crabe, crevette ou homard etc...

Selon une autre variante encore de l'invention, le même processus peut-être utilisé pour transférer au support un alcool, une liqueur, un cocktail ou un punch, dont le goût vient se superposer au goût du fruit déjà transféré au support. Cet alcool joue en même temps le rôle de conservateur pour le produit fini en supplément du sucre. Les nouveaux produits ainsi obtenus sont comparables aux fruits à l'eau de vie, mais sont présentés individuellement et à sec, et non au sein d'un bocal d'eau de vie ou dans un flacon.

A titre d'exemples de cette dernière variante, on peut citer des poires confites dans un cocktail de noix de coco et de rhum, des écorces d'oranges confites au Grand Marnier ou au Cointreau, des pêches confites dans de la liqueur de pêche, des pastèques, courges ou potirons confits avec un arôme de banane, de rhum et une pointe de vanille etc...

Enfin on notera que la même technique est également valable avec des succédanés du sucre, tels que par exemple l'Aspartam.

## Revendications

1. Procédé pour l'obtention de nouveaux produits agro-alimentaires par le processus usuel de confisage consistant à traiter un support tel qu'un fruit ou légume par des sirops de sucre à concentrations croissantes de manière à déterminer l'échange de l'eau contenue dans ledit support par le sucre contenu dans le sirop, caractérisé en ce que ledit support étant dépourvu de goût ou n'ayant qu'un goût peu prononcé ou peu agréable, ou encore perdant son goût par le confisage, on additionne auxdits sirops un extrait ou arôme d'un fruit, légume ou analogue, de manière telle que cet extrait ou arôme soit transféré en même temps que le sucre audit support confisable, auquel est ainsi conféré le goût correspondant.

2. Procédé selon la revendication 1, caractérisé en ce que ledit arôme consiste dans le jus d'un fruit, légume ou analogues dont le goût et la couleur doivent être transférés audit support.

3. Procédé selon la revendication 1, caractérisé en ce que ledit extrait est un extrait naturel ou artificiel ou semi-artificiel dudit fruit, légume ou analogues.

4. Procédé selon l'une quelconque des revendications 1 à 3, caractérisé en ce que le sirop de sucre contenant l'extrait ou l'arôme contient de plus un alcool ou une liqueur.

5. Procédé selon l'une quelconque des revendications 1 à 4, caractérisé en ce que ledit support est un produit confisable, choisi entre des fruits confisables, des légumes confisables, et des volumes moulés en matériaux comestibles confisables, choisis entre les matières pectiniques, les fibres de soja aggloméré, les masses de poisson dénaturé aggloméré ("tsurimi") et analogues, d'origine végétale, animale ou minérale.

6. Nouveau produit agro-alimentaire, caractérisé en ce qu'il consiste en un support comestible confisable dépourvu en lui même de goût, ou n'ayant un goût que peu prononcé, ou peu agréable, dans lequel a été transféré le goût et/ou l'arôme d'un produit en lui-même non confisable, par le procédé selon l'une quelconque des revendications 1 à 5.

7. Produit selon la revendication 6, caractérisé en ce que ledit support est un fruit ou légume confisable mais dépourvu de goût, de goût peu prononcé, ou encore perdant son goût par le confisage.

Office européen
des brevets

## RAPPORT DE RECHERCHE EUROPEENNE

Numero de la demande

EP    91 40 2852
Page 1

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,X<br>Y | FR-A-823 182 ( KONDIMA-VERK ENGELHARDT & HEIDEN)<br>* le document en entier *<br>--- | 1,2,5-7<br>4 | A23G3/00<br>A23B7/08<br>A23L1/325 |
| X | EP-A-0 210 069 (AXLE PLAN CO.)<br>* colonne 4, ligne 15 - ligne 49 *<br>* exemples 1-4 *<br>--- | 1,3,5-8 | A23L1/20 |
| Y | FR-A-2 517 517 (J.M.CUNY)<br>* page 1, ligne 10 - ligne 13 *<br>--- | 4 | |
| A | PATENT ABSTRACTS OF JAPAN<br>vol. 011, no. 096 (C-412)26 Mars 1987<br>& JP-A-61 249 356 ( NAGASAWA KIKAI SEISAKUSHO )<br>6 Novembre 1986<br>* abrégé *<br>--- | 5,8 | |
| A | PATENT ABSTRACTS OF JAPAN<br>vol. 013, no. 015 (C-559)13 Janvier 1989<br>& JP-A-63 222 644 ( RIBU INTERNATIONAL ) 16<br>Septembre 1988<br>* abrégé *<br>--- | 5,8 | |
| A | US-A-2 426 076 (A.M.ZENZES)<br>* revendications 2-4 *<br>* colonne 1, ligne 12 - colonne 2, ligne 22 *<br>* colonne 2, ligne 49 - colonne 3, ligne 18 *<br>--- | | |
| A | FR-A-2 182 234 (CENTRE FOR INDUSTRIAL RESEARCH)<br>* revendications 1,4-6 *<br>* page 4, ligne 17 - page 5, ligne 16 *<br>* exemples 3,5 *<br>--- | | |
| A | US-A-3 930 034 (S.P.SHANBHAG)<br>* revendications 1-3,5,11,12 *<br>* colonne 2, ligne 43 - ligne 52 *<br>* colonne 4, ligne 59 - colonne 5, ligne 7 *<br>* exemple 1 *<br>--- | | |

**DOMAINES TECHNIQUES RECHERCHES (Int. Cl.5 )**

A23G
A23B
A23L

-/--

Le présent rapport a été établi pour toutes les revendications

| Lieu de la recherche | Date d'achèvement de la recherche | Examinateur |
|---|---|---|
| LA HAYE | 10 FEVRIER 1992 | |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P0402)

Office européen
des brevets

**RAPPORT DE RECHERCHE EUROPEENNE**

Numero de la demande

EP   91 40 2852
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-809 136 (P.CALAME-ROSSET)<br>* le document en entier *<br><br>----- | | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 10 FEVRIER 1992 | |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

.........................................................................................

& : membre de la même famille, document correspondant

EPO FORM 1503 03.82 (P0402)

7